# EUROPEAN PATENT SPECIFICATION

(11) **EP 1 545 071 B1**
(45) Date of publication and mention of the grant of the patent: **08.07.2009**
(21) Application number: 03293249.3
(22) Date of filing: 19.12.2003
(51) Int. Cl.: H04L 12/56, H04Q 11/04

(54) **A method for improved handling of dynamic bandwidth changes in a transport network using inverse multiplexing**
Verfahren zur verbesserten Behandlung von dynamischen Bandbreitenveränderungen in einem Transportnetz mit inversem Multiplexen
Procédé pour le traitement amélioré de changements dynamiques de bande passante dans un réseau de transport utilisant multiplexage inverse

(43) Date of publication of application: 22.06.2005
(73) Proprietor: Alcatel Lucent, 75008 Paris (FR)
(72) Inventor: Neustadt, Alf, 70180 Stuttgart (DE); Treillard, Pascal, 91120 Palaiseau (FR); Isonuma, Yutaka, Isogo-ku Yokohama (JP)
(74) Representative: El Manouni, Josiane

(56) References cited:
- EP-A- 0 892 577
- EP-A- 0 901 301
- EP-A- 0 920 236
- US-B1- 6 292 466
- "AF-PHY-0086.001 V1.1" , ATM FORUM XP002280276 Appendix C

## Description

The present invention is generally concerned with communication systems.

The present invention in particular applies to mobile communication systems, in particular third generation mobile communication systems, such as in particular UMTS (« Universal Mobile Telecommunication System »).

In a general way, mobile communication systems are subject to standardisation; therefore, for more information on such systems, it is possible to refer to the corresponding standards, published by the corresponding standardisation bodies.

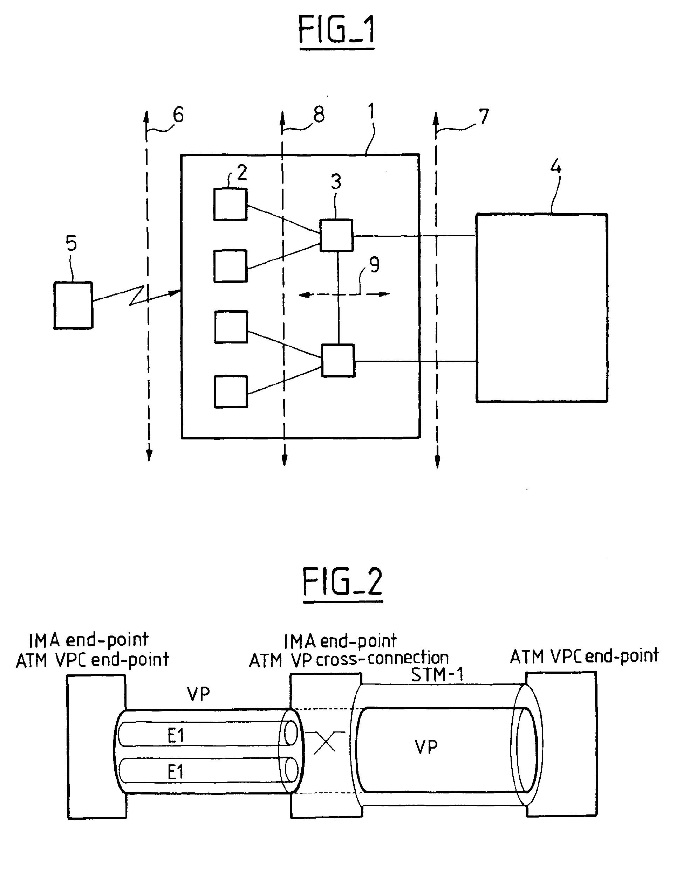

It is simply recalled that the general architecture of a mobile communication system essentially comprises, as illustrated in figure 1:
- a Radio Access Network 1, or RAN,
- a Core Network 4, or CN.

The RAN comprises network elements such as base stations 2 and base station controllers 3. The RAN is in relation, on the one hand with mobile terminals 5, via an interface 6, and on the other hand with the CN via an interface 7. The CN is in relation with external networks (not illustrated specifically). Within the RAN, the base stations communicate with the base station controllers via an interface 8.

In systems of UMTS type, the RAN is called UTRAN (UMTS Terrestrial Radio Access Network), the base stations are called Node B, the base station controllers are called RNC (Radio Network Controller), and the mobile terminals are called UE (User Equipment). The interface 6 is called Uu interface, the interface 7 is called lu interface, the interface 8 is called lub interface, and an interface 9 between RNCs, called lur interface, is also introduced. The interface 6 is also called radio interface, and the interfaces 7, 8, 9, are also called terrestrial interfaces. The network elements of UTRAN are connected via a transport network (not illustrated specifically). A logical link within this transport network enables two network elements to communicate via one of the terrestrial interfaces lub, lur, lu.

One of the transport technologies used in UTRAN is ATM (Asynchronous Transfer Mode), based on an asynchronous time multiplexing of packets of fixed length called cells. In a general way, ATM is subject to standardisation; therefore, for more information, it is possible to refer to the corresponding standards, published by the corresponding standardisation bodies. It is simply recalled that the protocol layers in an ATM network include, besides a physical layer, an ATM layer and an ATM Adaptation Layer (AAL). The ATM layer is connection oriented, and performs cell transmission on a logical connection between a source and a destination, this logical connection also being called Virtual Channel (VC). Besides, several VCs can be regrouped to form a Virtual Path (VP). The source and destination are also called ATM Virtual Path Connection (VPC) end-points, and the nodes of the transport network between ATM VPC end-points are also called ATM VP cross-connects.

IMA (Inverse Multiplexing for ATM) is a technique defined by ATM Forum, allowing to carry an ATM connection (a VPC) over more than one physical link, thus allowing a VP bandwidth to overcome the limit of the physical link rate on which it is carried (see AF-PHY-0086.001 : Inverse Multiplexing for ATM (IMA) Specification Version 1.1). Briefly recalled, the process in inverse multiplexing for ATM is the reverse of multiplexing. IMA performs a distribution of ATM cells over a group of physical links, also called IMA group or IMA bundle. The ATM layer remains transparent to the functions performed by IMA, which belong to the physical layer.

IMA is for instance potentially useful on E1 interfaces, offering 2.048 Mbit/s bit rate, out of which 1.920 Mbit/s can be used with usual ATM mapping (see ITU-T recommendation G.804 : ATM cell mapping into Plesiochronous Digital Hierarchy (PDH)). Without IMA, a VP is thus limited to at most 1.920 Mbit/s for its Peak Cell Rate, whereas it can go up to almost twice more if two E1 interfaces are used with IMA.

IMA also gives more flexibility, allowing to offer bandwidth on demand, depending on the needs.

IMA also allows to offer in-built redundancy: if an IMA bundle is made of « n » physical links, and a failure affects one (or several) of these links, the ATM connection carried on it may still use the « p » links that remain operational. However, there is of course an impact on the available bandwidth, which is roughly the previous bandwidth multiplied by « p » and divided by « n ».

It is relatively easy to know the available bandwidth at the points where the IMA is terminated, but not standardised, as the above-recalled reference (AF-PHY-0086.001) states that "Treatment of CAC (Connection Admission Control) under dynamic bandwidth changes is left to the discretion of the ATM interface implementers". However, since this is not standardised at the IMA termination point, nothing is defined to inform the endpoint of the ATM connection, if the ATM connection is not terminated at the same place as the IMA. An example where the ATM connection is not terminated at the same place as the IMA is illustrated for instance in figure 2.

In a similar way, PPP Multilink protocol (MP) is defined in RFC 1990, which states in its general overview section "the goal of multilink operation is to coordinate multiple independent links between a fixed pair of systems, providing a virtual link with greater bandwidth than any of the constituent members [...]. All packets received over links identified as belonging to the multilink arrangement are presented to the same network-layer protocol preocessing machine, whether they have multilink headers or not." RFC 2686 defines the multi-class extension to multi-link PPP, and aims at providing improvements for transmitting high priority packets over multi-link PPP. PPP Multilink protocol presents the same drawbacks as IMA, when the endpoint of the connection, does not correspond to the endpoints of PPP multilink protocol.

In the example illustrated in figure 2, a connection established between two connection end-points uses inverse multiplexing for ATM such that a first connection end-point corresponds to an inverse multiplexing for ATM end-point and a second connection end-point does not correspond to an inverse multiplexing for ATM end-point. In this example, the first connection end-point is the one shown on the left side of the figure, the second connection end-point is the one shown on the right side of the figure, and an ATM VP Cross-Connection is shown in the middle of the figure. In this example, a VP is carried between the ATM VPC end-point of the left side and the ATM VP Cross-Connection using IMA (the IMA group in this example is using two E1 links). In this example, a VP is carried between the ATM VP Cross-Connection and the ATM VPC end-point of the right side using a STM-1 (Synchronous Transport Module 1) of the SDH (Synchronous Digital Hierarchy).

In the example illustrated in figure 2, nothing is defined to inform the ATM VPC end-point shown on the right side of the figure of a failure of a physical link in the IMA bundle shown on the left side of the figure.

Therefore, one problem to solve is to find a way to detect the failure of link(s) in IMA bundle by an ATM VPC end-point not supporting IMA. This problem in particular arises in the case of the lub interface defined in UMTS, connecting a Node B (assumed here to support IMA), and a Radio Network Controller (RNC) (assumed here not to support IMA), with the use of an intermediate ATM VP cross-connect, terminating the IMA. Indeed, certain actions required to relieve from overload or congestion due to link(s) failure, such as load adjustment to correct this situation, are advantageously implemented in the RNC.

It should be noted that figure 2 only illustrates one example where such a problem arises. Such a problem could also arise in other examples, for instance in the case where IMA would not be terminated in an ATM connection end-point, but in an intermediary (not illustrated) node.

A first solution to this problem is to rely on existing ATM maintenance flows, in particular Performance Monitoring (PM) flows (F4 for the example provided above of a VP Connection, or F5 for the supervision of the VCs supported on this VP). This allows detecting ATM cell losses if they occur.

A second solution to this problem is to rely on O&M (Operation and Maintenance) mechanisms: the failure of a physical link can be detected and reported to an Operation and Maintenance Centre, where corrective actions can be taken.

The implementation of the first solution (F4 and/or F5 PM flows) is complex and consumes a significant part of resources. It is not always available in ATM equipment. In addition, it does not provide a clear information on the reason of the ATM cell losses. It also does not provide reliable information, in case the traffic at the time of the failure is low enough to allow it to go through the remaining operational links. At the very moment of the failure, the ATM cells already queued to be transmitted on a physical link will be lost, but as soon as the failure is detected at the IMA termination, the traffic will not be routed via this (or these) links any longer. If the physical capacity remaining operational is big enough compared to the current ATM traffic, no more losses will be detected by F4/F5.

The implementation of the second solution provides means to detect the failure. However, they cannot be assumed to be reliable (the O&M chain does not have the same reliability requirements as the telecom part), and they are likely to provide information too slowly compared to the real time requirements of a telecom application.

Another problem to solve is to optimize the handling of congestion situations due to IMA link(s) failure, in a way that IMA link(s) failure has as little impact as possible on the traffic.

The present invention in particular enables to solve part or all of the above-mentioned problems, or to avoid part or all of the above-mentioned drawbacks. More generally the aim of the present invention is to improve the handling of link(s) failure (or more generally dynamic bandwidth changes) in connection with the use of inverse multiplexing (such as in particular IMA) in a transport network (such as in particular the Radio Access Network of a mobile communication system).

It should be noted that IMA is only an example of inverse multiplexing technique to which the present invention applies and for which the present invention will, by way of example, be more particularly disclosed, but that the present invention also applies to other inverse multiplexing techniques such as for example, in the case where the transport technology used on the transport network is IP (Internet Protocol), multilink/multiclass PPP (Point-to-Point Protocol) as defined in particular in RFC 2686 and RFC 1990.

EP 0920236 discloses a system and method for managing data traffic through a path that includes a transmission link having a transport rate that is subject to change with time. An example of transmission link having a dynamically varying transport rate is an inverse multiplexing over ATM (IMA) system.

EP 0892577 relates to automatic control of ATM dynamic connection bandwidth in ATM interfaces and more particularly inverse multiplexers. It discloses a mechanism for managing bandwidth loading on a communication interface.

These and other objects are achieved, in one aspect of the present invention, by a method for improved handling of dynamic bandwidth changes in a transport network using inverse multiplexing such that at least one connection end-point of a connection does not correspond to an inverse multiplexing end-point, a method including a step wherein said at least one connection end-point is informed of a bandwidth change by at least one inverse multiplexing end-point aware of said bandwidth change.

Other aspects or objects of the present invention are defined in the appended claims.

These and other objects of the present invention will become more apparent from the following description taken in conjunction with the accompanying drawings, wherein:
- figure 1 is intended to recall the general architecture of a mobile communication system, such as in particular UMTS,
- figures 2, 3, 4 are intended to illustrate examples of application of the present invention,
- figures 5, 6, 7, 8 are intended to illustrate different examples of embodiment of the present invention.

The present invention may also be explained in the following way.

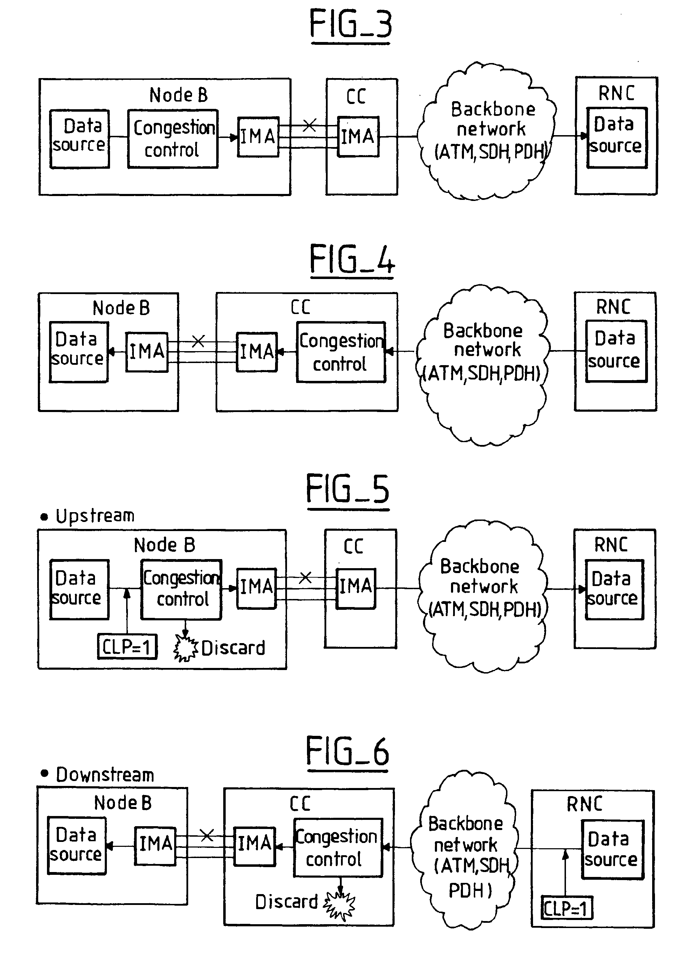

First, in relation with figure 3 or 4, the effect of an IMA link failure is envisaged. By way of example, figures 3 and 4 correspond to the example presented in relation with figure 2, i.e. to the case of the lub interface defined in UMTS, connecting a Node B (assumed here to support IMA), and a Radio Network Controller (RNC) (assumed here not to support IMA), with the use of an intermediate ATM VP cross-connect (noted CC), terminating the IMA. Figure 3 illustrates the case of the uplink direction, and figure 4 illustrates the case of the downlink direction. Besides, in figures 3 and 4, IMA terminating means (noted IMA) and congestion control means (noted Congestion Control) have been illustrated in the IMA end-points, i.e. Node B and CC, and a data source has been illustrated in the ATM connection end-points, i.e. Node B and RNC.

Let us consider as an example a VCC defined with a bandwidth of 5 Mbit/s, going over an IMA group of three E1 links. If one of the three E1 links fails either in a termination point or in an intermediate cross-connect, the available bandwidth suddenly drops to about 4 Mbit/s. If the bandwidth of the VCC is used at its maximum at the moment of the failure, the buffers of the equipment at the point of failure will rapidly overflow. This will result in rapid cell loss (in that equipment), and cell delay for the cells which will not be discarded. Because of real time constraints in UMTS on the lub interface, cell delay will likely result in cell discard in the Node B (for downlink direction), so that it is quite possible that a large part of the VCC is lost, until the source reacts.

It is recalled that such real time constraints are due to macro-diversity possibility and need for a UE (User Equipment) to receive data on the different radio links by which it is simultaneously connected to different Node B at the same time. Therefore, the RNC needs to provide accurate transmission timing information to the Node B, and if the data arrives too late compared to the time the Node B needs to send that data, according to this transmission timing information, the Node B discards the data. Another reason why a large part of the VCC may be lost is due to AAL 2 multiplexing possibility. It is recalled that AAL2 is a specific ATM Adaptation Layer (AAL) which allows several low bit rate connections to share a same ATM connection, by multiplexing several short packets called CPS packets into a same ATM cell. It is possible (and it is often the case in high load situation) that AAL 2 CPS packets are spread over several ATM cells. If this is the case, the loss of one ATM cell results in the loss, not only of the data contained in this ATM cell, but also of the data contained in all the CPS packets spread over several ATM cells including this ATM cell. In addition, for data services in particular, the payload of a CPS packet is only a part of an AAL2 SSSAR SDU (Service Specific Segmentation And Reassembly Service Data Unit, AAL2 SSSAR being specified in ITU-T 1.366.1), which may include up to several thousands of bytes. The loss of a single CPS packet will imply the loss of the complete SDU.

There may be different ways by which an IMA end-point becomes aware of a link failure, such as, as indicated above:
- in the case of link failure occuring in the transmission direction from an IMA end-point, by detection of buffer overflow,
- in the case of link failure occuring in the transmission direction to an IMA end-point, by detection of reception delay.

As understood by the skilled person, other ways could of course be possible, such as for example, in the case of link failure occuring in the transmission direction from an IMA end-point, by supervision of the transmission link status information carried over that link, such as AIS, RDI or LOS, as defined for the case of E1 link in ITU-T recommendation G.775, or other faults as defined in ITU-T recommendation G.732 (failure of power supply, failure of codec, loss of incoming signal, loss of frame alignment, excessive bit error ratio, alarm indication received) , or corresponding faults for other transmission means on which IMA can be applied.

There are two areas where action may be required in case of IMA link failure: one is for prevention; the other is for immediate (or very short term) defence.

### 1. Preventive actions

As a preventive measure, the high priority traffic and lower priority traffic should be distinguished (possibly with several levels). This has no effect as long as no congestion is experienced. Only in case of congestion, the lower priority traffic may be impacted, depending on the level of congestion.

The indication of the priority in case of congestion can be performed at application layer, and exchanged between end points when the corresponding connections are established.

In addition, at transport level, the highest priority traffic can be protected by the use of the CLP (Cell Loss Priority) bit set to 0 by the ATM connection termination point.

In the case of ML-PPP, different service classes can be used instead. ML-MC PPP offers four classes. In the following chapters ATM-CLP can be read as service class in the ML/MC-PPP case.

### 1.1. Marking high priority traffic at transport level (use of CLP bit)

One possible starting point to solve the problem is to rely on the Cell Loss Priority (CLP) bit mechanism defined in ATM (see ITU-T recommendation I.371: Traffic control and congestion control in B-ISDN), as illustrated by way of example in figure 5 (for the uplink) or in figure 6 (for the downlink) for the same example than the one illustrated in figures 3, 4. At any time, each ATM cell is marked with a priority indicator (CLP bit). This has no effect, except in case of congestion encountered in the network. If the network encounters congestion, it will discard CLP 1 cells first, as illustrated by way of example in figure 5 or 6. On the contrary, the cells with CLP 0 will not be discarded. Note that in absence of congestion, there is no difference in handling cells (in particular CLP bit has nothing to do with time priority: ATM layer guarantees in-sequence delivery, and a CLP 0 cell will never overtake a CLP 1 cell). Marking of high priority traffic at transport level thus consists in appropriately choosing the CLP at source level, depending on the importance the cell has with respect to a potential congestion problem.

Advantageously, at least the cells of the control plane should be marked with CLP 0. It is also possible to mark important cells of the user plane with CLP 0, but care should be taken that if too many cells are marked, the efficiency of the mechanism may be lost. For instance, if an IMA bundle is made of two links, no more than half the cells should be marked with CLP 0. If the bundle is made of four links, and if the protection needs to be efficient even if the case of loss of three out of the four links, then no more than 25% of the cells should be marked with CLP 0.

Marking only the control plane cells is an easy choice, and the proportion of the control plane cells over the total traffic is in general sufficiently low.

Distinguishing important cells with CLP bit can be a way to guarantee that even in case of link failure inside an IMA group, the bandwidth of the bundle made of the remaining links is still sufficient to enable important cells to go through. This of course assumes that the congestion mechanisms implemented in the crossed ATM nodes follow ITU-T recommendation 1.371.

Note that the distinction between high priority traffic and low priority traffic is performed at the time the traffic is established, i.e. independently of any congestion situation. The CLP marking has to be performed on both directions, by each source (Node B and RNC in the case of lub interface). This implies that both the Node B and the RNC know what cells should be marked with CLP = 0.

If only the control traffic is to be marked, this is simple for both ends to know it, by configuration.

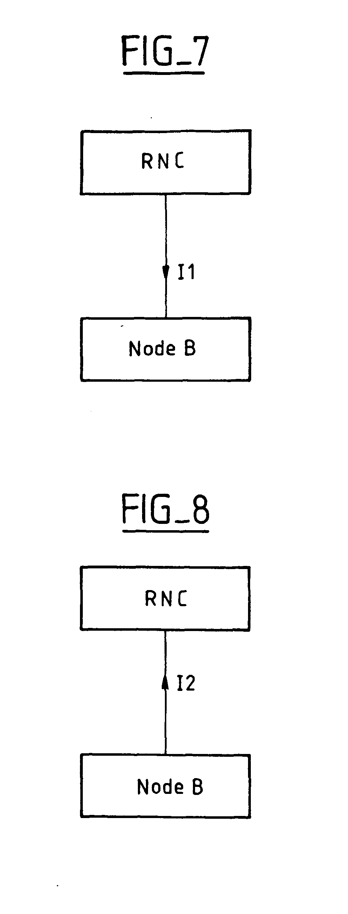

If also some of the user plane traffic is to be marked with CLP = 0, then the RNC has to inform the Node B of the importance of the user plane traffic with regard to potential congestion, as illustrated by way of example in figure 7 with information noted 11 sent from RNC to Node B.

There is already a parameter in NBAP (Node B Application Part) protocol that could be used for that purpose. This parameter is called "Allocation/Retention Priority" and indicates the priority level in the allocation and retention of Node B internal resources. The Node B could extend the use of this parameter to select which user plane traffic needs to be protected against congestion. It is recalled that NBAP is a signalling protocol used on the lub interface of UTRAN, at a radio network layer, i.e. for the handling of radio network related issues (see 3GPP TS 25.433 : UTRAN lub interface NBAP signalling). Use of a specific new parameter defined in NBAP could also be considered. Use of ALCAP protocol information could also be considered. It is recalled that ALCAP (« Access Link Control Application Part ») is a signalling protocol used in UTRAN, at a transport network layer, i.e. for the handling of transport technology related issues (including the establishing of AAL2 connections); see :
- 3GPP TS 25. 426 : UTRAN lur and lub Interface Data Transport & Transport Signalling for DCH Data Streams,
- 3GPP TS 25. 435 : UTAN lub Interface User Plane Protocols for Common Transport Channel Data Streams,
- ITU-T recommendation Q.2630-1 : AAL type 2 Signalling Protocol (Capability Set 1),
- ITU-T recommendation Q.2630-2 : AAL type 2 Signalling Protocol (Capability Set 2).

Nothing exists for that purpose in the existing versions of that protocol (ITU-T Q.2630.1 and ITU-T Q.2630.2), so that an extension would have to be defined in these protocols for that purpose.

Note that in case the user plane traffic needs to be protected, it may become a little more complex at ATM level, depending on whether AAL2 connections of different priorities are multiplexed or not on the same VC. If a VC is defined per priority, the marking is straightforward. If AAL2 connections of different priorities are multiplexed on the same VC, any ATM cell containing at least part of a CPS packet of high priority should be protected by CLP 0.

### 1.2. Marking high priority traffic at application level (example of UTRAN lub interface)

At radio link establishment time, the RNC may indicate its priority by the information element "Allocation/Retention Priority". This information element is normally used in case of radio congestion, when a higher priority radio link needs to be established, if this cannot be done without releasing an already existing radio link. Several priority levels are defined in 3GPP TS 25. 433, and the lower priority radio links should be released first.

The same information element can be used to cover the transport congestion problem. In case of congestion detection, the Node B can locally decide to release the connections corresponding to the low priority radio links.

### 2. Defence actions

### 2.1. Discarding of CLP1 cells by ATM equipment in case of congestion

As a defence action in case of experienced IMA link failure, the CLP bit can be used in case of congestion, as defined in ITU-T recommendation 1.371. In case of congestion, cells marked with CLP 0 will in principle be handled with higher priority than cells with CLP 1 by any ATM equipment.

### 2.2. Release of low priority connections by the endpoint equipment in case of congestion

If one endpoint is aware of the IMA link failure, it can decide to release part or all of the low priority traffic, depending on the level of congestion.

### 2.3. Transfer of information of the IMA link failure (Sending an application control message from Node B to RNC about the IMA link failure)

If one endpoint is aware of the IMA link failure, it can inform the other endpoint of the situation, so that the other side can also take actions on its side, for example release calls on its side. In the example of lub interface, the Node B can inform the RNC, as illustrated by way of example in figure 8 with information noted 12 sent by the Node B to the RNC. The Node B can inform the RNC by transferring information at a level above ATM to the RNC. More generally the point terminating the IMA bundle and detecting the failure indicates the loss of the link, in a form or another. A convenient form is in particular an indication of the percentage of the total bandwidth of the concerned VP, which remains available (or in an equivalent way, the percentage that becomes unavailable).

Let us assume that IMA operates in "symmetrical configuration and operation". Once the state of both Tx and Rx of a certain physical link in IMA group becomes "Active", this link is used as a part of IMA group and ATM cell is passed from/to upper layer.

If the Tx/Rx of (at least) one link gets out of "Active" state (event A) due to the detection of failure, this link is never used for ATM cell transmission/reception, and the cells are transmitted/received using the rest of links still "active" in IMA group. This may lead to the lub overload situation. Therefore, the Node B and the RNC shall take the actions to prevent from lub overload described in this section.

On the other hand, if the state of the link becomes "Active" again (event B) due to the recovery of failure, this link should be used again for ATM cell transmission/reception in the IMA group, and the Node B and the RNC shall take the recovery actions described in this section.

Note: IMA has parameters P_{TX}, P_{RX}, which indicate the minimum number of links required for IMA group. When the number of "Active" links become less than these values, the IMA group stops Tx/Rx of any ATM cells even if one or more physical links is still alive in the group. What is described here is an example, which does not come under this case. That is, it is the case when the number of "Active" links is still more (or equal) than P_{TX} and P_{RX}, after the link is failed.

In case of event A, to recover from overload, it is required to reduce load put on the IMA group and this means that RNC or Node-B has to be aware of link failure on the IMA group (occurrence of event A). According to the failure information, they have to reduce the load to fit the remaining bandwidth or to prevent adding new load on that IMA group. Also, RNC or Node B has to be aware of link recovery (occurrence of event B) to retrieve from the overload situation.

On the Node-B side, it is easy to get link status information from an IMA unit because it is implemented inside Node-B. The information is simply transferred from the IMA unit, to the ATM module.

On the RNC side (assuming the IMA unit is not implemented there, but in an intermediate cross-connect, as illustrated in figure 2), it is proposed to implement a proprietary NBAP message to transfer the link status. The use of ALCAP protocol information could be a possible alternative. Nothing exists for that purpose in the existing versions of that protocol (see above-mentioned ITU-T recommendations Q.2630.1 and Q. 2630.2), so that an extension would have to be defined in these protocols for that purpose.

An example of method could for example include the following steps:
1) A failure occurs on a downlink (DL) or uplink (UL) link in an IMA group,
2) The IMA unit in Node B detects the link failure and reports it to the Node B control,
3) The Node B control generates a proprietary NBAP message and sends it to the RNC through UL lub,
4) RNC adjusts load on the link to the level allowed by the remaining capacity. This covers short-term actions (such as releasing low priority calls). It also includes medium term actions such as updating the connection admission control parameters, so that new calls are only accepted up to a point compatible with the failure situation.
5) Conversely, when the link is repaired and put back in traffic, the Node B informs the RNC by a similar mechanism.

Examples of such a proprietary message could be (the following list not being limitative):
- A pure proprietary NBAP message completely newly defined.
- The Resource Status Indication message which could be used with Information Elements (IEs) with a specific definition.

In any case, the message should contain the information, which may affect the available bandwidth. Following information is proposed to be included in this message.
✧ The number of active E1 links in the IMA group,
✧ The type of link (e.g. E1, T1...),
✧ IMA frame length.

Other parameters are also possible, e.g. directly providing the available bandwidth.

The message is to be sent to RNC on the change of any element, which affects its available bandwidth.

As a generalisation, it is also proposed that when any elements are changed which may lead to the change of available bandwidth, Node B informs RNC of its information. This will allow RNC to control available bandwidth dynamically without manual operation, e.g. when:
- the physical link is added/removed to/from IMA group intentionally (e.g. in case IMA group is operated with 2 E1 at first, and 1 E1 is added when the traffic is increased: it can be done without any manual operation in RNC).
- the IMA parameters are changed (which leads to change of bandwidth) etc.

As indicated above in 2.2, in case of congestion, the Node B can locally decide to release low priority connections, based on the priority of the corresponding radio link, as indicated by the RNC at radio link establishment time.

This may be a complementary action to what is described above in 2.3, or an alternative, avoiding the need to modify the standard.

As already indicated, the present invention is not limited to the example presented in relation figure 2 or 3 to 6. For example, in the case where IMA would not terminate in the Node B but in an intermediary (not illustrated) node, a solution could be that the Node B is first informed of an IMA link failure by said intermediary node, and the Node B then informs the RNC of said link failure. This solution would of course require that the intermediary Node can inform the Node B of the IMA link failure, such as for example by means of an application defined above ATM layer between that intermediary node and the Node B.

In a more general way, in a transport network using inverse multiplexing such that at least one connection end-point does not correspond to an inverse multiplexing end-point, a method according to the present invention provides at least one step wherein said at least one connection end-point is informed of a bandwidth change by at least one inverse multiplexing end-point aware of said bandwidth change.

The present invention in particular allows the following advantages:
- The solution is quick: it only requires the detection time in the Node B, and the transmission time of the information to the RNC, then the defence action inside the RNC.
- This solution is reliable: the failure of the link is transferred to RNC obviously. In addition, this is conveyed by ATM cell with its CLP 0, so it is expected to reach RNC in very high probability.
- It does not rely on complex ATM Performance Management cells.
- It does not imply the presence of the O&M system to react.

## Claims

1. A method for handling of dynamic bandwidth changes in a transport network using inverse multiplexing such that at least one connection end-point, ATM VPC end-point, does not correspond to an inverse multiplexing end-point IMA end-point, said method including a step wherein said at least one connection end-point is informed of a bandwidth change by at least one inverse multiplexing end-point aware of said bandwidth change, wherein said step wherein said at least one connection end-point is informed of a bandwidth change by at least one inverse multiplexing end-point aware of said bandwidth change includes a step wherein information indicative of a bandwidth change is sent via a signalling protocol used on said given interface.

2. A method according to claim 1, wherein inverse multiplexing corresponds to inverse Muliplexing for ATM, IMA.

3. A method according to claim 1, wherein inverse multiplexing corresponds to multilink/multiclass PPP.

4. A method according to any of claims 1 to 3, further including a step wherein a connection end-point corresponding to an inverse multiplexing end-point informs said connection end-point not corresponding to an inverse multiplexing end-point of a bandwidth change of which it is aware.

5. A method according to any of claims 1 to 3, further including a first step wherein a first connection end-point not corresponding to an inverse multiplexing end-point is informed of a bandwidth change by an inverse multiplexing end-point aware of said bandwidth change, and a second step wherein said first connection end-point informs a second connection end-point not corresponding to an inverse multiplexing end-point of said bandwidth change.

6. A method according to any of claims 1 to 5, wherein information indicative of a bandwidth change, received by said at least one connection end-point, includes a currently available bandwidth.

7. A method according to any of claims 1 to 6, wherein a bandwidth change corresponds to a failure of at least one link in a group of links between two inverse multiplexing end-points.

8. A method according to claim 7, further including a step wherein, in the case of link failure occuring in the transmission direction from said inverse multiplexing end-point, said inverse multiplexing end-point becomes aware of said link failure by supervision of transmission link status information.

9. A method according to claim 7, further including a step wherein, in the case of link failure occuring in the transmission direction from said inverse multiplexing end-point, said inverse multiplexing end-point becomes aware of said link failure by detection of buffer overflow.

10. A method according to claim 7, further including a step wherein, in the case of link failure occuring in the transmission direction to said inverse multiplexing end-point, said inverse multiplexing end-point becomes aware of said link failure by detection of reception delay.

11. A method according to any of claims 1 to 10, further including a step wherein said at least one connection end-point uses information indicative of a bandwidth change, received from said at least one inverse multiplexing end-point, to correspondingly adjust the traffic load.

12. A method according to any of claims 7 to 11, further including a step wherein said at least one connection end-point uses said information indicative of a bandwidth change, received from said at least one inverse multiplexing end-point to take defence actions against congestion due to said link failure.

13. A method according to any of claims 1 to 12, wherein said transport network corresponds to the radio access network (1) of a mobile communication system, and a first and a second connection end-point respectively correspond to a first and a second network element communicating across a given interface of said radio access network.

14. A method according to claim 1, wherein said signalling protocol corresponds to a signaling protocol at a radio network layer.

15. A method according to claim 1, wherein said signalling protocol corresponds to a signaling protocol at a transport network layer.

16. A method according to any of claims 13 to 15, wherein said first and second network elements respectively correspond to a base station (Node B) and to a base station controller (RNC).

17. A method according to claim 16, further including a step wherein said base station controller (RNC) uses information indicative of a bandwidth change received from said base station to adjust the traffic load in a corresponding way.

18. A method according to claim 17, wherein said load adjustment includes releasing low priority calls.

19. A method according to claim 17, wherein said load adjustment includes updating connection admission control parameters.

20. A method according to claim 1, wherein said signalling protocol of a radio network layer corresponds to Node B Application Part, NBAP.

21. A method according to claim 20, wherein said information is sent in a « Resource Status Indication » message used by NBAP protocol.

22. A method according to claim 1, wherein said signalling protocol at a transport network layer corresponds to Access Link Control Application Part, ALCAP.

23. A network element for the radio access network (1) of a mobile communication system, including means for performing a method according to any of claims 1 to 12.

24. A base station (Node B), for the radio access network (1) of a mobile communication system, including means for performing a method according to any of claims 13 to22.

25. A base station controller (RNC), for the radio access network (1) of a mobile communication system, including means for performing a method according to any of claims 13 to 22.

26. A method according to any of claims 1 to 22 , said method further including a step wherein said transport network takes preventive and /or defence actions against congestion due to said link failure, based on a criterion of traffic priority, in a way as to protect traffic of high priority against said congestion.

27. A method according to claim 26, wherein inverse multiplexing corresponds to IMA (Inverse Muliplexing for ATM).

28. A method according to claim 26, wherein inverse multiplexing corresponds to multilink/multiclass PPP.

29. A method according to any of claims 26 to 28, wherein said preventive actions include marking traffic priority.

30. A method according to claim 29, wherein said marking is performed at transport level.

31. A method according to claim 30, wherein said transport network using ATM as a transport technology, said marking of traffic priority includes marking ATM cells with a Cell Loss Priority, CLP, bit.

32. A method according to any of claims 30 or 31, wherein said transport network using ATM as a transport technology, in the case where AAL2 connections of different priorities are multiplexed on a same VC, an ATM cell containing at least part of a CPS packet of high priority is considered to have a high priority.

33. A method according to claim 29, wherein said marking is performed at application level.

34. A method according to any of claims 26 to 33, wherein said transport network using ATM as a transport technology, said defence actions include ATM cell discarding.

35. A method according to any of claims 26 to 34, wherein high priority traffic to be protected against said congestion is determined having regard to the least admissible traffic corresponding to the highest number of links failure in an inverse multiplexing for ATM group.

36. A method according to any of claims 26 to 35, wherein high priority traffic includes control plane traffic.

37. A method according to any of claims 26 to 35, wherein high priority traffic includes important user plane traffic.

38. A method according to any of claims 29 to 37, wherein marking traffic priority is performed in both transmission directions.

39. A method according to any of claims 26 to 38, wherein said transport network corresponds to the radio access network (1) of a mobile communication system, enabling two network elements to communicate across a given interface of said radio access network.

40. A method according to claim 39, including a step wherein a first network element receives from a second network element information representative of traffic priority to be used as said criterion.

41. A method according to claim 40, wherein said first network element receives said information from said second network element via a signalling protocol used on said given interface.

42. A method according to claim 41, wherein said signalling protocol corresponds to a signalling protocol at a radio network layer.

43. A method according to claim 41, wherein said signalling protocol corresponds to a signalling protocol a transport network layer.

44. A method according to any of claims 40 to 43, wherein said first and second network elements respectively correspond to a base station (Node B) and to a base station controller (RNC).

45. A method according to claim 41, wherein said signalling protocol at a radio network layer corresponds to Node B Application Part, NBAP.

46. A method according to claim 45, wherein said information corresponds to the « Allocation/Retention Priority » parameter used by NBAP protocol.

47. A method according to claim 41, wherein said signalling protocol at a transport network layer corresponds to Access Link Control Application Part, ALCAP.

48. A network element, for the radio access network (1) of a mobile communication system, including means for performing a method according to any of claims 26 to 38.

49. A base station (Node B), for the radio access network (1) of a mobile communication system, including means for performing a method according to any of claims 39 to 47.

50. A base station controller (RNC), for the radio access network (1) of a mobile communication system, including means for performing a method according to any of claims 39 to 47.

## Patentansprüche

1. Ein Verfahren zur Behandlung von dynamischen Bandbreitenveränderungen in einem Transportnetz mit Inversmultiplex-Betrieb, in welchem mindestens ein Verbindungsendpunkt, ATM VPC-Endpunkt, nicht einem Inversmultiplex-Endpunkt, IMA-Endpunkt, entspricht, wobei das Verfahren einen Schritt umfasst, in welchem der besagte mindestens eine Verbindungsendpunkt von mindestens einem Inversmultiplex-Endpunkt, welcher eine Bandbreitenveränderung erfasst hat, über die besagte Bandbreitenveränderung informiert wird, wobei der besagte Schritt, in welchem der besagte mindestens eine Verbindungsendpunkt von mindestens einem Inversmultiplex-Endpunkt, welcher eine Bandbreitenveränderung erfasst hat, über die besagte Bandbreitenveränderung informiert wird, einen Schritt umfasst, in welchem die Informationen, die eine Bandbreitenveränderung anzeigen, über ein an der besagten gegebenen Schnittstelle verwendetes Signalisierungsprotokoll gesendet werden.

2. Ein Verfahren nach Anspruch 1, wobei der Inversmultiplex-Betrieb dem Inversmultiplex-Betrieb für ATM, IMA entspricht.

3. Ein Verfahren nach Anspruch 1, wobei der Inversmultiplex-Betrieb dem Multilink/Multiclass-PPP entspricht.

4. Ein Verfahren nach einem beliebigen der Ansprüche 1 bis 3, weiterhin umfassend einen Schritt, in welchem ein Verbindungsendpunkt, welcher einem Inversmultiplex-Endpunkt entspricht, den besagten Verbindungsendpunkt, welcher nicht einem Inversmultiplex-Endpunkt entspricht, über eine von ihm erkannte Bandbreitenveränderung informiert.

5. Ein Verfahren nach einem beliebigen der Ansprüche 1 bis 3, weiterhin umfassend einen ersten Schritt, in welchem ein erster Verbindungsendpunkt, welcher nicht einem Inversmultiplex-Endpunkt entspricht, von einem Inversmultiplex-Endpunkt, welcher eine Bandbreitenveränderung erkannt hat, über die besagte Bandbreitenversnderung informiert wird, sowie einen zweiten Schritt, in welchem der besagte erste Verbindungsendpunkt einen zweiten Verbindungsendpunkt, welcher nicht einem Inversmultiplex-Endpunkt entspricht, über die besagte Sandbreitenvetänderung informiert.

6. Ein Verfahren nach einem beliebigen der Ansprüche 1 bis 5, wobei die von dem besagten mindestens einen Verbindungsendpunkt empfangenen Informationen, welche eine Bandbreitenveranderung anzeigen, eine aktuell verfügbare Bandbreite enthalten.

7. Ein Verfahren nach einem beliebigen der Ansprüche 1 bis 6, wobei eine Bandbreitenveränderung einem Ausfall mindestens eines Links in einer Gruppe von Links zwischen zwei Inversmultiplex-Endpunkten entspricht.

8. Ein Verfahren nach Anspruch 7, weiterhin umfassend einen Schritt, in welchem der besagte Inversmultiplex-Endpunkt bei Ausfall eines Links in der Übertragungsrichtung von dem besagten Inversmultiplex-Endpunkt den besagten Ausfall des Links durch Überwachen der Übertragungslink-Statusinformationen erkennt.

9. Ein Verfahren nach Anspruch 7, weiterhin umfassend einen Schritt, in welchem der besagte Inversmultiplex-Endpunkt bei Ausfall eines Links in der Übertragungsrichtung von dem besagten Inversmultiplex-Endpunkt den besagten Ausfall des Links durch Erfassen eines Pufferüberlaufs erkennt.

10. Ein Verfahren nach Anspruch 7, weiterhin umfassend einen Schritt, in welchem der besagte Inversmultiplex-Endpunkt bei Ausfall eines Links in der Übertragungsrichtung zu dem besagten Inversmultiplex-Endpunkt den besagten Ausfall des Links durch Erfassen der Empfangsverzögerung erkennt.

11. Ein Verfahren nach einem beliebigen der Ansprüche 1 bis 10, weiterhin umfassend einen Schritt, in welchem der besagte mindestens eine Verbindungsendpunkt die von dem besagten mindestens einen Inversmultiplex-Endpunkt empfangenen Informationen, welche eine Bandbreitenveränderung anzeigen, verwendet, um die Verkehrslast entsprechend anzupassen.

12. Ein Verfahren nach einem beliebigen der Ansprüche 7 bis 11, weiterhin umfassend einen Schritt, in welchem der besagte mindestens eine Verbindungsendpunkt die von dem besagten mindestens einen Inversmultiplex-Endpunkt empfangenen Informationen, welche eine Bandbreitenveränderung anzeigen, verwendet, um Schutzmaßnahmen gegen eine von dem besagten Ausfall eines Links verursachte Überlastung zu ergreifen.

13. Ein Verfahren nach einem beliebigen der Ansprüche 1 bis 12, wobei das besagte Tränsportnetz dem Funkzugangsnetz (1) eines mobilen Kommunikationssystems entspricht, und ein erster und ein zweiter Verbindungsendpunkt jeweils einem ersten und einem zweiten Netzwerkelement entspricht, welche über eine gegebene Schnittstelle des besagten Funkzugangsnetzes kommunizieren.

14. Ein Verfahren nach Anspruch 1, wobei das besagte Signalisierungsprotokoll einem Signalisierungsprotokoll auf einer Funknetzschicht entspricht.

15. Ein Verfahren nach Anspruch 1, wobei das besagte Signalisierungsprotokoll einem Signalisierungsprotokoll auf einer Transportnetzschicht entspricht.

16. Ein Verfahren nach einem beliebigen der Ansprüche 13 bis 15, wobei das besagte erste und das besagte zweite Netzwerkelement jeweils einer Basisstation (Knoten B) und einer Basisstations-Steuereinrichtung (RNC) entsprechen.

17. Ein Verfahren nach Anspruch 16, weiterhin umfassend einen Schritt, in welchem die besagte Basisstations-Steuereinrichtung (RNC) die von der besagten Basisstation empfangenen Informationen, welche eine Bandbrotefweranderung anzeigen, verwendet, um die Verkehrslast dementsprechend anzupassen.

18. Ein Verfahren nach Anspruch 17, wobei die besagte Lastanpassung die Freigabe von Rufen mit niedriger Priorität umfasst.

19. Ein Verfahren nach Anspruch 17, wobei die besagte Lastanpassung die Aktualisierung der Verbindungszulassungssteuerungsparameter umfasst.

20. Ein Verfahren nach Anspruch 1, wobei das besagte Signalisierungsprotokoll auf einer Funknetzschicht dem Node B Application Part, NBAP, entspricht.

21. Ein Verfahren nach Anspruch 20, wobei die besagten Informationen in einer von dem NBAP-Protokoll verwendeten "Resource Status Indication"-Nachricht gesendet werden.

22. Ein Verfahren nach Anspruch 1, wobei das besagte Signalisierungsprotokoll auf einer Transportnetzschicht dem Access Link Control Application Part, ALCAP, entspricht.

23. Ein Netzwerkelement für das Funkzugangsnetz (1) eines mobilen Kommunikationssystems, mit Mitteln zum Durchführen eines Verfahrens gemäß einem beliebigen der Ansprüche 1 bis 12.

24. Eine Basisstation (Knoten B) für das Funkzugangsnetz (1) eines mobilen Kommunikationssystems, mit Mitteln zum Durchführen eines Verfahrens gemäß einem beliebigen der Ansprüche 13 bis 22.

25. Eine Basisstations-Steuereinrichtung (RNC) für das Funkzugangsnetz (1) eines mobilen Kommunikationssystems, mit Mitteln zum Durchführen eines Verfahrens gemäß einem beliebigen der Ansprüche 13 bis 22.

26. Ein Verfahren nach einem beliebigen der Ansprüche 1 bis 22, wobei das Verfahren weiterhin einen Schritt umfasst, in welchem das besagte Transportnetz Vorbeuge-und/oder Schutzmaßnahmen gegen eine von dem besagten Ausfall eines Links verursachte Überlastung ergreift, basierend auf einem Verkehrsprioritätskriterium, um den Verkehr mit hoher Priorität gegen die besagte Überlastung zu schützen.

27. Ein Verfahren nach Anspruch 26, wobei der Inversmultiplex-Betrieb dem IMA (Inversmultiplex für ATM) entspricht.

28. Ein Verfahren nach Anspruch 26, wobei der Inversmultiplex-Betrieb dem Multilink/Multiclass-PPP entspricht.

29. Ein Verfahren nach einem beliebigen der Ansprüche 26 bis 28, wobei die besagten Vorbeugungsmaßnahmen das Markieren der Verkehrspriorität umfassen.

30. Ein Verfahren nach Anspruch 29, wobei das besagte Markieren auf der Transportebene erfolgt.

31. Ein Verfahren nach Anspruch 30, wobei das besagte Transportnetz ATM als Transporttechnologie benutzt, wobei das besagte Markieren der Verkehrspriorität das Markieren von ATM-Zellen mit einem Zellenverlustprioritäts-, CLP, Bit umfasst.

32. Ein Verfahren nach einem beliebigen der Ansprüche 30 oder 31, wobei das besagte Transportnetz ATM als Transporttechnologie benutzt, und wobei, wenn AAL2-Verbindungen mit verschiedenen Prioritäten auf einer selben VC gemultiplext sind, eine ATM-Zelle, welche mindestens einen Teil eines CPS-Pakets mit hoher Priorität enthält, als eine Zelle mit hoher Priorität betrachtet wird.

33. Ein Verfahren nach Anspruch 29, wobei das besagte Markieren auf der Anwendungsebene erfolgt.

34. Ein Verfahren nach einem beliebigen der Anspruche 26 bis 33, wobei das besagte Transportnetz ATM als Transporttechnologie benutzt und die Schutzmaßnahmen das Ausrangieren von ATM-Zellen umfassen.

35. Ein Verfahren nach einem beliebigen der Ansprüche 26 bis 34, wobei der gegen die besagte Überlastung zu schützende Verkehr mit hoher Priorität unter Berücksichtigung des geringsten zulässigen Verkehrs, welcher der höchsten Anzahl von Ausfällen eines Links in einem Inversmultiplex-Betrieb für die ATM-Gruppe entspricht, bestimmt wird.

36. Ein Verfahren nach einem beliebigen der Ansprüche 26 bis 35, wobei der Verkehr mit hoher Priorität einen Verkehr auf der Steuerungsebene umfasst.

37. Ein Verfahren nach einem beliebigen der Ansprüche 26 bis 35, wobei der Verkehr mit hoher Priorität einen bedeutenden Verkehr auf der Benutzerebene umfasst.

38. Ein Verfahren nach einem beliebigen der Ansprüche 29 bis 37, wobei das Markieren der Verkehrspriorität in beiden Übertragungsrichtungen erfolgt.

39. Ein Verfahren nach einem beliebigen der Ansprüche 26 bis 38, wobei das besagte Transportnetz dem Funkzugangsnetz (1) eines mobilen Kommunikationssystems entspricht, wobei das Verfahren die Kommunikation zwischen zwei Netzwerkelementen über eine gegebene Schnittstelle des besagten Funkzugangsnetzes ermöglicht.

40. Ein Verfahren nach Anspruch 39, umfassend einen Schritt, in welchem ein erstes Metzwerkelementvon einem zweiten Netzwerkelement Informationen, welche für eine als das besagte Kriterium zu verwendende Verkehrspriorität repräsentativ sind, empfängt.

41. Ein Verfahren nach Anspruch 40, wobei das besagte erste Netzwerkelement die besagten Informationen von dem besagten zweiten Netzwerkelement über ein an der besagten gegebenen Schnittstelle verwendetes Signalisierungsprotokoll empfängt.

42. Ein Verfahren nach Anspruch 41, wobei das besagte Signalisierungsprotokoll einem Signalisierungsprotokoll auf einer Funknetzschicht entspricht.

43. Ein Verfahren nach Anspruch 41, wobei das besagte Signalisierungsprotokoll einem Signalisierungsprotokoll auf einer Transportnetzschicht entspricht.

44. Ein Verfahren nach einem beliebigen der Ansprüche 40 bis 43, wobei das besagte erste und das besagte zweite Netzwerkelementjeweils einer Basisstation (Knoten B) und einer Basisstations-Steuiereinrichtung (RNC) entsprechen.

45. Ein Verfahren nach Anspruch 41, wobei das besagte Signalisierungsprotokoll auf einer Funknetzschicht dem Node B Application Part, NBAP, entspricht.

46. Ein Verfahren nach Anspruch 45, wobei die besagten Informationen dem von dem NBAP-Protokoll verwendeten Zuweisungs-/Erhaltungsprioritäts-Parameter entsprechen.

47. Ein Verfahren nach Anspruch 41, wobei das besagte Signalisierungsprotokoll auf einer Transportnetzschicht dem Access Link Control Application Part, ALCAP, entspricht.

48. Ein Netzwerkelement für das Funkzugangsnetz (1) eines mobilen Kommunikationssystems, mit Mitteln zum Durchführen eines Verfahrens gemäß einem beliebigen der Ansprüche 26 bis 38.

49. Eine Basisstation (Knoten B) für das Funkzugangsnetz (1) eines mobilen Kommunikationssystems, mit Mitteln zum Durchführen eines Verfahrens gemäß einem beliebigen der Ansprüche 39 bis 47.

50. Eine Funknetzwerk-Steuereinrichtung (RNC) für das Funkzugangsnetz (1) eines mobilen Kommunikationssystems, mit Mitteln zum Durchführen eines Verfahrens gemäß einem beliebigen der Ansprüche 39 bis 47.

## Revendications

1. Procédé pour traiter des changements de bande passante dynamique dans un réseau de transport utilisant le multiplexage inverse de telle façon qu'au moins un point d'extrémité de connexion, point d'extrémité ATM VPC, ne corresponde pas à un point d'extrémité de multiplexage inverse, point d'extrémité IMA, ledit procédé comprenant une étape au cours de laquelle ledit au moins un point d'extrémité de connexion est informé d'un changement de bande passante par au moins un point d'extrémité de multiplexage inverse conscient dudit changement de bande passante, ladite étape au cours de laquelle ledit au moins un point d'extrémité de connexion est informé d'un changement de bande passante par au moins un point d'extrémité de multiplexage inverse conscient dudit changement de bande passante comprenant une étape au cours de laquelle une information indicative d'un changement de bande passante est envoyée par l'intermédiaire d'un protocole de signalisation utilisé sur ladite interface donnée.

2. Procédé selon la revendication 1, dans lequel le multiplexage inverse correspond au multiplexage inverse pour ATM, IMA.

3. Procédé selon la revendication 1, dans lequel le multiplexage inverse correspond au PPP multiliaison/multiclasse.

4. Procédé selon l'une quelconque des revendications 1 à 3, comprenant en outre une étape au cours de laquelle un point d'extrémité de connexion correspondant à un point d'extrémité de multiplexage inverse informe ledit point d'extrémité de connexion ne correspondant pas à un point d'extrémité de multiplexage inverse d'un changement de bande passante dont il est conscient.

5. Procédé selon l'une quelconque des revendications 1 à 3, comprenant en outre une première étape au cours de laquelle un premier point d'extrémité de connexion ne correspondant pas à un point d'extrémité de multiplexage inverse est informé d'un changement de bande passante par un point d'extrémité de multiplexage inverse conscient dudit changement de bande passante, et une deuxième étape au cours de laquelle ledit premier point d'extrémité de connexion informe un deuxième point d'extrémité de connexion ne correspondant pas à un point d'extrémité de multiplexage inverse dudit changement de bande passante.

6. Procédé selon l'une quelconque des revendications 1 à 5, dans lequel une information indicative d'un changement de bande passante, reçue par ledit au moins un point d'extrémité de connexion, comprend une bande passante actuellement disponible.

7. Procédé selon l'une quelconque des revendications 1 à 6. dans lequel un changement de bande passante correspond à la défaillance d'au moins une liaison dans un groupe de liaisons entre deux points d'extrémité de multiplexage inverse.

8. Procédé selon la revendication 7, comprenant en outre une étape au cours de laquelle, dans le cas où la défaillance de la liaison se produit dans le sens de l'émission depuis ledit point d'extrémité de multiplexage inverse, ledit point d'extrémité de multiplexage inverse devient conscient de ladite défaillance de la liaison par supervision de l'information de l'état de la liaison d'émission.

9. Procédé selon la revendication 7, comprenant en outre une étape au cours de laquelle, dans le cas où la défaillance de la liaison se produit dans le sens de l'émission depuis ledit point d'extrémité de multiplexage inverse, ledit point d'extrémité de multiplexage inverse devient conscient de ladite défaillance de la liaison par détection d'un débordement de tampon.

10. Procédé selon la revendication 7, comprenant en outre une étape au cours de laquelle, dans le cas où la défaillance de la liaison se produit dans le sens de l'émission vers ledit point d'extrémité de multiplexage inverse, ledit point d'extrémité de multiplexage inverse devient conscient de ladite défaillance de la liaison par détection d'un retard de réception.

11. Procédé selon l'une quelconque des revendications 1 à 10, comprenant en outre une étape au cours de laquelle ledit au moins un point d'extrémité de connexion utilise l'information indicative d'un changement de bande passante, reçue dudit au moins un point d'extrémité de multiplexage inverse, pour ajuster de manière correspondante la charge de trafic.

12. Procédé selon l'une quelconque des revendications 7 à 11, comprenant en outre une étape au cours de laquelle ledit au moins un point d'extrémité de connexion utilise ladite information indicative d'un changement de bande passante, reçue dudit au moins un point d'extrémité de multiplexage inverse, pour prendre des mesures de défense contre la congestion due à la dite défaillance de la liaison.

13. Procédé selon l'une quelconque des revendications 1 à 12, dans lequel ledit réseau de transport correspond au réseau d'accès radio (1) d'un système de communication mobile, et un premier et un deuxième point d'extrémité de connexion correspondent respectivement à un premier et un deuxième élément de réseau communiquant à travers une interface donnée dudit réseau d'accès radio.

14. Procédé selon la revendication 1, dans lequel ledit protocole de signalisation correspond à un protocole de signalisation situé dans une couche réseau radio.

15. Procédé selon la revendication 1, dans lequel ledit protocole de signalisation correspond à un protocole de signalisation situé dans une couche réseau transport.

16. Procédé selon l'une quelconque des revendications 13 à 15, dans lequel lesdits premier et deuxième éléments de réseau correspondent respectivement à une station de base (noeud B) et à un contrôleur de station de base (RNC).

17. Procédé selon la revendication 16, comprenant en outre une étape au cours de laquelle ledit contrôleur de station de base (RNC) utilise l'information indicative d'un changement de bande passante reçue de ladite station de base pour ajuster la charge de trafic d'une façon correspondante.

18. Procédé selon la revendication 17, dans lequel ledit ajustement de charge comprend la libération des appels à basse priorité.

19. Procède selon la revendication 17, dans lequel ledit ajustement de charge comprend la mise à jour des paramètres de contrôle d'admission à la connexion.

20. Procédé selon la revendication 1, dans lequel ledit protocole de signalisation situé dans une couche réseau radio correspond à la Partie Application de Noeud B, NBAP.

21. Procédé selon la revendication 20, dans lequel ladite information est envoyée dans un message d'« indication d'état des ressources » utilisé par le protocole NBAP.

22. Procédé selon la revendication 1, dans lequel ledit protocole de signalisation situé dans une couche réseau transport correspond à la Partie Application de Contrôle de Liaison d'Accès, ALCAP.

23. Élément de réseau pour le réseau d'accès radio (1) d'un système de communication mobile, comprenant des moyens pour exécuter un procédé selon l'une quelconque des revendications 1 à 12.

24. Station de base (noeud B), pour le réseau d'accès radio (1) d'un système de communication mobile, comprenant des Moyens pour exécuter un procédé selon l'une quelconque des revendications 13 à 22.

25. Contrôleur de station de base (RNC) pour le réseau d'accès radio (1) d'un système de communication mobile, comprenant des moyens pour exécuter un procédé selon l'une quelconque des revendications 13 à 22.

26. Procédé selon l'une quelconque dés revendications 1 à 22, ledit procédé comprenant en outre une étape au cours de laquelle ledit réseau de transport prend des mesures préventives et/ou de défense contre la congestion due à ladite défaillance de la liaison, selon un critère de priorité de trafic, de manière à protéger le trafic à priorité élevée contre ladite congestion.

27. Procédé selon la revendication 26, dans lequel le multiplexage inverse correspond à IMA (multiplexage inverse pour ATM).

28. Procédé selon la revendication 26, dans lequel le multiplexage inverse correspond au PPP multiliaison/multiclasse.

29. Procédé selon l'une quelconque des revendications 26 à 28, dans lequel lesdites mesures prèventives comprennent le marquage de la priorité du trafic.

30. Procédé selon la revendication 29, dans lequel ledit marquage est effectué au niveau transport.

31. Procédé selon la revendication 30, dans lequel ledit réseau de transport utilise ATM comme technologie de transport, ledit marquage de priorité de trafic comprenant le marquage des cellules ATM avec un bit de Priorité de Perte de Cellule, CLP.

32. Procédé selon l'une quelconque des revendications 30 ou 31, dans lequel ledit réseau de transport utilise ATM comme technologie de transport, dans lequel, dans le cas où les connexions AAL2 de priorités différentes sont multiplexées sur un même VC, une cellule ATM contenant au moins une partie d'un paquet CPS de haute priorité est considérée comme ayant une haute priorité.

33. Procédé selon la revendication 29, dans lequel ledit marquage est effectué au niveau application.

34. Procédé selon l'une quelconque des revendications 26 à 33, dans lequel ledit réseau de transport utilise ATM comme technologie de transport, lesdites mesures défensives comprenant l'élimination des cellules ATM.

35. Procédé selon l'une quelconque des revendications 26 à 34, dans lequel le trafic à haute priorité à protéger contre ladite congestion est déterminé au regard du trafic le moins admissible correspondant au plus grand nombre de défaillances de liaisons dans un multiplexage inverse pour le groupe ATM.

36. Procédé selon l'une quelconque des revendications 26 à 35, dans lequel le trafic à haute priorité comprend le trafic sur le plan des commandes.

37. Procédé selon l'une quelconque des revendications 26 à 35, dans lequel le trafic à haute priorité comprend le trafic important sur le plan des utilisateurs.

38. Procédé selon l'une quelconque des revendications 29 à 37, dans lequel le marquage de la priorité du trafic est effectué dans les deux sens de transmission.

39. Procédé selon l'une quelconque des revendications 26 à 38, dans lequel ledit réseau de transport correspond au réseau d'accès radio (1) d'un système de communication mobile, permettant à deux éléments de réseau de communiquer à travers une interface donnée dudit réseau d'accès radio.

40. Procédé selon la revendication 39, comprenant une étape dans laquelle un premier élément de réseau reçoit d'un deuxième élément de réseau une information représentative de la priorité de trafic à utiliser pour ledit critère.

41. Procédé selon la revendication 40, dans lequel ledit premier élément de réseau reçoit ladite information dudit deuxième élément de réseau par l'intermédiaire d'un protocole de signalisation utilisé sur ladite interface.

42. Procédé selon la revendication 41, dans lequel ledit protocole de signalisation correspond à un protocole de signalisation situé dans une couche réseau radio.

43. Procédé selon la revendication 41, dans lequel ledit protocole de signalisation correspond à un protocole de signalisation situé dans une couche réseau transport.

44. Procédé selon l'une quelconque des revendications 40 à 43, dans lequel lesdits premier et deuxième éléments de réseau correspondent respectivement à une station de base (noeud B) et à un contrôleur de station de base (RNC).

45. Procédé selon la revendication 41, dans lequel ledit protocole de signalisation situé dans une couche réseau radio correspond à la Partie Application de Noeud B, NBAP.

46. Procédé selon la revendication 45, dans lequel ladite information correspond au paramètre « Priorité d'allocation/rétention » utilisé par le protocole NBAP.

47. Procédé selon la revendication 41, dans lequel ledit protocole de signalisation situé dans une couche réseau transport correspond à la Partie Application de Contrôle de Liaison d'Accès, ALCAP.

48. Élément de réseau pour le réseau d'accès radio (1) d'un système de communication mobile, comprenant des moyens pour exécuter un procédé selon l'une quelconque des revendications 26 à 38.

49. Station de base (noeud B) pour le réseau d'accès radio (1) d'un système de communication mobile, comprenant des moyens pour exécuter un procédé selon l'une quelconque des revendications 39 à 47.

50. Contrôleur de station de base (RNC) pour le réseau d'accès radio (1) d'un système de communication mobile, comprenant des moyens pour exécuter un procédé selon l'une quelconque des revendications 39 à 47.
